# FASCICULE DE BREVET EUROPEEN

(11) **EP 2 367 773 B1**
(45) Date de publication et mention de la délivrance du brevet: **23.10.2013**
(21) Numéro de dépôt: 09799166.5
(22) Date de dépôt: 17.12.2009
(51) Int. Cl.: C03B 5/43, F27D 1/00, C04B 35/48, C04B 35/107, C04B 35/109, C04B 35/657

(54) **BLOC REFRACTAIRE ET FOUR DE FUSION DE VERRE**
FEUERFESTER BLOCK FÜR GLASSCHMELZOFEN
REFRACTORY BLOCK FOR A GLASS-MELTING FURNACE

(30) Priorité: 22.12.2008 FR 0858914
(43) Date de publication de la demande: 28.09.2011
(73) Titulaire: Saint-Gobain Centre De Recherches Et D'etudes Europeen, 92400 Courbevoie (FR)
(72) Inventeur: ALASIA, Micaela, F-84660 Maubec (FR)
(74) Mandataire: Sartorius, Jérome
(86) Numéro de dépôt international: PCT/IB2009/055813
(87) Numéro de publication internationale: WO 2010/073195

(56) Documents cités:
- EP-A- 0 495 662
- WO-A-2006/032757
- DE-A1- 2 738 974
- FR-A- 2 897 861
- YEUGO FOGAING ET AL: "Elastic properties and microstructure: study of two fused cast refractory materials" JOURNAL OF THE EUROPEAN CERAMIC SOCIETY, ELSEVIER SCIENCE PUBLISHERS, BARKING, ESSEX, GB, vol. 27, no. 2-3, 19 novembre 2006 (2006-11-19), pages 1843-1848, XP005729833 ISSN: 0955-2219
- RATTO P C: "REFRACTAIRES ELECTROFONDUS DU SYSTEME AZS: DIFFERENTES METHODES DE FABRICATION OXYDANTES ET LEURS IMPACTS SUR LE COMPORTEMENT DU REFRACTAIRE EN SERVICE//FUSED CAST REFRACTORIES OF THE AZS SYSTEM: DIFFERENT OXIDIZING MANUFACTURING METHODS AND THEIR IMPACT" VERRE, INSTITUT DU VERRE, PARIS, FR, vol. 8, no. 3, 1 juin 2002 (2002-06-01), pages 22-27, XP001123091 ISSN: 0984-7979
- TRIBOLLET J-C ET AL: "HOW STRESSES DEVELOP DURNG HEATING UP OF AZS FUSED-CAST BLOCKS" GLASS INDUSTRY, GLASS INDUSTRY MAGAZINE. NEW YORK, US, vol. 76, no. 11, 10 octobre 1995 (1995-10-10), pages 26,29-32, XP000535683 ISSN: 0017-1026
- DUNKI M: "STUDIES ON THE GLASSY AND REACTION PHASES GIVEN OFF BY FUSED-CAST AZS BLOCKS AND THEIR EFFECTS ON GLASS QUALITY" GLASTECHNISCHE BERICHTE, VERLAG DER DEUTSCHEN GLASTECHNISCHEN GESELLSCHAFT, FRANKFURT, DE, vol. 62, no. 11, 1 novembre 1989 (1989-11-01), pages 389-395, XP000083789 ISSN: 0017-1085

## Description

### Domaine technique

L'invention concerne un produit réfractaire fondu AZS (Alumine-Zircone-Silice).

### Etat de la technique

Parmi les produits réfractaires, on distingue les produits fondus, bien connus pour la construction des fours de fusion du verre, et les produits frittés.

A la différence des produits frittés, les produits fondus comportent le plus souvent une phase vitreuse intergranulaire reliant des grains cristallisés. Les problèmes posés par les produits frittés et par les produits fondus, et les solutions techniques adoptées pour les résoudre, sont donc généralement différents. Une composition mise au point pour fabriquer un produit fritté n'est donc pas a priori utilisable telle quelle pour fabriquer un produit fondu, et réciproquement.

Les produits fondus, souvent appelés « électrofondus », sont obtenus par fusion d'un mélange de matières premières appropriées dans un four à arc électrique ou par toute autre technique adaptée à ces produits. Le bain de matière en fusion est ensuite coulé dans un moule puis le produit obtenu subit un cycle de refroidissement contrôlé.

Parmi les produits fondus, les produits électrofondus AZS, c'est-à-dire comportant majoritairement de l'alumine (Al₂O₃), de la zircone (ZrO₂) et de la silice (SiO₂), sont connus depuis plusieurs dizaines d'années. Le brevet US-A-2 438 552 décrit un des premiers perfectionnements apportés à ce type de produit. Les auteurs préconisent l'ajout de Na₂O (1-2,2%) et MgO/CaO (0,2-0,8%) pour répondre à des problèmes de faisabilité concernant des produits comportant moins de 70% d'Al₂O₃, de 14 à 40% ZrO₂ et de 9 à 12% de SiO₂.

Les produits AZS commercialisés actuellement par Saint-Gobain SEFPRO, tels que l'ER-1681, l'ER-1685 ou l'ER-1711, contiennent de 45 à 50% d'Al₂O₃, de 32 à 41% de ZrO₂, de 12 à 16% de SiO₂ et environ 1% de Na₂O.

Ces produits conviennent bien pour la fabrication des fours de verrerie. Plus particulièrement, les produits AZS actuels sont principalement utilisés pour les zones en contact avec le verre en fusion ainsi que pour la superstructure des fours de verrerie.

Ces produits sont performants mais il existe un besoin permanent pour améliorer les conditions de conduite des fours de verrerie ainsi que la qualité du verre.

En particulier, les blocs de produit fondu AZS constituant les cuves des fours de verrerie sont soumis à une température plus importante au contact du verre en fusion qu'à l'extérieur de la cuve. En fonctionnement, il arrive que le contact entre deux blocs de cuve adjacents ne soit réel que dans une zone correspondant à une température proche de la température de dilatation maximale des blocs. Ainsi, il s'agit d'une zone critique dans laquelle il faut particulièrement éviter la corrosion par le verre.

Une telle corrosion sera d'autant moins importante que la température dans cette zone de contact est diminuée et que le verre est moins visqueux.

Il existe donc un besoin pour un produit fondu AZS présentant un comportement dilatométrique permettant d'abaisser la température dans la zone critique des cuves de four de verrerie tout en conservant une bonne faisabilité.

La présente invention vise à satisfaire ce besoin.

### Résumé de l'invention

Plus particulièrement, elle concerne un produit réfractaire fondu ayant la composition chimique moyenne suivante, en % en masse sur la base des oxydes et pour un total de 100% :
ZrO₂ : 30 - 46% ;
SiO₂ : 10 - 16% ;
Al₂O₃ : complément à 100% ;
Y₂O₃ ≥ 50/ZrO₂ et Y₂O₃ ≤ 5%,
Na₂O+K₂O : 0,5 - 4 % ;
CaO : ≤ 0,5% ;
Autres espèces : ≤ 1,5%.

Dans un mode de réalisation, Y₂O₃ est en partie, voire en totalité, remplacé par un ou plusieurs oxydes choisis parmi CeO₂, MgO, Sc₂O₃ et V₂O₅.

Dans un mode de réalisation, Na₂O et/ou K₂O sont en partie, voire en totalité, remplacés par B₂O₃.

Un produit selon l'invention peut encore comporter une ou plusieurs des caractéristiques optionnelles suivantes :
- De préférence, ZrO₂ > 32% et/ou ZrO₂ < 41% ;
- De préférence, SiO₂ > 11% et/ou SiO₂ < 15% ;
- De préférence, Al₂O₃ > 38%, voire Al₂O₃ > 42% et/ou Al₂O₃ < 52%, voire Al₂O₃ < 50% ;
- Y₂O₃ + CeO₂ + MgO + Sc₂O₃ + V₂O₅ ≤ 5% ;
- De préférence, la teneur en Y₂O₃ + CeO₂ + MgO + ScₑO₃ + V₂O₅, de préférence la teneur en Y₂O, est supérieure à 60/ZrO₂, de préférence supérieure à 70/ZrO₂.
- De préférence, la teneur en Y₂O₃ + CeO₂ + MgO + Sc₂O₃ + V₂O₅, de préférence la teneur en Y₂O₃, est supérieure à 1,2%, de préférence supérieure à 1,5 %, de préférence supérieure à 2,0% ;
- De préférence, la teneur en Y₂O₃, voire la teneur en Y₂O₃ + CeO₂ + MgO + Sc₂O₃ + V₂O₅, est inférieure à 4,5% ;
- le rapport ZrO₂/Y₂O₃ et/ou le rapport ZrO₂/(Y₂O₃ + CeO₂ + MgO + Sc₂O₃ + V₂O₅) est supérieur à 9 et/ou inférieur à 30, inférieur à 25, voire inférieur à 20, inférieur à 15, voire inférieur à 12 ;
- La teneur en Na₂O + K₂O est supérieure à 0,8 %, voire supérieure à 1,0% et/ou inférieure à 3,0%, inférieure à 2,5%, voire inférieure à 2,0% ;
- La teneur en Na₂O + K₂O + B₂O₃ est supérieure à 0,5%, supérieure à 0,8 %, voire supérieure à 1,0% et/ou inférieure à 4,0%, inférieure à 3,0%, inférieure à 2,5%, voire inférieure à 2,0% ;
- Les « autres espèces » sont des impuretés ;
- Le produit se présente sous la forme d'un bloc.

L'invention concerne enfin un four de fusion de verre comportant un produit selon l'invention, notamment un produit fabriqué ou susceptible d'être fabriqué par un procédé selon l'invention, en particulier dans une région du four dans laquelle le produit est susceptible d'entrer en contact avec du verre en fusion ou avec des gaz dégagés par la fusion du verre, et notamment en superstructure (voûte).

### Définitions

De manière générale, on appelle « produit fondu », « produit fondu et coulé » ou « obtenu par fusion » un produit solide, éventuellement recuit, obtenu par solidification complète, par refroidissement, d'un bain de matière en fusion. Un « bain de matière en fusion » est une masse qui, pour conserver sa forme, doit être contenue dans un récipient. Un bain de matière en fusion, apparemment liquide, peut contenir des parties solides, mais en quantité insuffisante pour qu'elles puissent structurer ladite masse.

Un produit selon l'invention peut contenir de l'oxyde d'hafnium, HfO₂, naturellement présent dans les sources de zircone. Sa teneur massique dans le produit selon l'invention est inférieure ou égale à 5%, généralement inférieure ou égale à 2%. Par « ZrO₂ », on désigne classiquement la zircone et ces traces d'oxyde d'hafnium.

Par « impuretés », on entend les constituants inévitables, introduits nécessairement avec les matières premières ou résultant de réactions avec ces constituants. En particulier, les oxydes de fer, de titane sont connus pour être néfastes et leur teneur doit être limitée à des traces introduites à titre d'impuretés avec les matières premières. De préférence, la quantité massique de Fe₂O₃ + TiO₂ est inférieure à 0,55 %.

Sauf mention contraire, tous les pourcentages de la présente description sont des pourcentages massiques sur la base des oxydes.

### Description détaillée

Un produit selon l'invention peut être fabriqué suivant les étapes a) à c) décrites ci-dessous :
a) mélange de matières premières de manière à former une charge de départ,
b) fusion de ladite charge de départ jusqu'à obtention d'un bain de matière en fusion,
c) solidification dudit bain de matière en fusion, par refroidissement contrôlé de manière à obtenir un produit réfractaire selon l'invention.

A l'étape a), les matières premières sont déterminées de manière à garantir une composition, dans le produit fini, conforme à l'invention.

Y₂O₃ peut être substitué par CeO₂ et/ou MgO et/ou Sc₂O₃ et/ou V₂O₅.

La présence d'oxyde de sodium et/ou de potassium est nécessaire pour conférer à la phase vitreuse des propriétés physiques et chimiques adaptées. La teneur en Na₂O+K₂O ne doit cependant pas dépasser 4% sinon la résistance à la corrosion et/ou la faisabilité serai(en)t considérablement dégradée(s). Na₂O et/ou K₂O peuvent être substitués par B₂O₃.

La présence d'oxyde de calcium est néfaste dans les produits de l'invention car elle est susceptible de générer des cristaux d'aluminate de chaux dans la phase vitreuse. La présence de ces cristaux peut entraîner des défauts de fracturation du produit. Par ailleurs, une teneur trop importante en CaO conduit à une dissolution des cristaux de zircone, ce qui diminue la résistance à la corrosion du produit. La teneur de CaO ne doit donc pas dépasser 0,5%.

A l'étape b), la fusion est de préférence réalisée grâce à l'action combinée d'un arc électrique assez long, ne produisant pas de réduction, et d'un brassage favorisant la réoxydation des produits.

Pour minimiser la formation de nodules d'aspect métallique et éviter la formation de fentes ou fendillements dans le produit final, il est préférable d'opérer la fusion dans des conditions oxydantes.

Préférentiellement, on utilise le procédé de fusion à l'arc long décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes.

A l'étape c), le bain de matière en fusion est de préférence coulé dans un moule adapté pour la fabrication d'un bloc. Le refroidissement est de préférence effectué à la vitesse d'environ 10°C par heure.

Tout procédé conventionnel de fabrication de produits fondus AZS destinés à des applications dans des fours de fusion de verre peut être mis en oeuvre, pourvu que la composition de la charge de départ permette d'obtenir des produits présentant une composition conforme à celle d'un produit selon l'invention.

Un produit selon l'invention peut constituer tout ou partie d'un bloc.

Le bloc peut notamment présenter une masse de plus de 10 kg, de plus de 20 kg, voire de plus de 50 kg, de plus de 150 kg, de plus de 300 kg, voire de plus de 900 kg et/ou de moins de 2 tonnes. En particulier, il peut présenter une masse d'environ 1 tonne.

La forme du bloc n'est pas limitative.

Le bloc peut présenter au moins une dimension (épaisseur, longueur, ou largeur) d'au moins 150 mm, de préférence d'au moins 200 mm, voire d'au moins 400 mm, voire d'au moins 600 mm, voire d'au moins 800 mm ou même d'au moins 1000 mm, voire encore d'au moins 1600 mm.

Dans un mode de réalisation avantageux, l'épaisseur, la longueur et la largeur du bloc sont d'au moins 150 mm, voire d'au moins 200 mm, voire d'au moins 300 mm, voire d'au moins 400 mm.

Un produit selon l'invention peut être également utilisé sous la forme d'un produit mince, c'est-à-dire présentant une épaisseur comprise entre de 50 à 150 mm, en particulier une épaisseur inférieure à 120 mm, voire inférieure à 100 mm. Il peut notamment se présenter sous la forme d'une dalle.

De préférence, le bloc ou la dalle fait partie ou constitue une paroi ou la sole d'un four, en particulier d'un four de fusion de verre.

### Exemples

Les exemples non limitatifs suivants sont donnés dans le but d'illustrer l'invention.

Dans ces exemples, on a employé les matières premières suivantes :
- la zircone CC10 vendue par la Société Européenne des Produits Réfractaires contenant principalement en moyenne, en poids, 98,5% de ZrO₂+HfO₂, 0,5% de SiO₂ et 0,2% de Na₂O,
- le sable de zircon à 33% de silice,
- l'alumine de type AC44 vendue par la société Pechiney et contenant en moyenne 99,4% d'Al₂O₃,
- le carbonate de sodium contenant 58,5% de Na₂O,
- l'oxyde d'yttrium de pureté supérieure à 99%.

Les produits ont été préparés selon le procédé classique de fusion en four à arc, puis coulés pour obtenir des blocs de format 200x400x150 mm³.

L'analyse chimique des produits obtenus est donnée dans le tableau 1 ; il s'agit d'une analyse chimique moyenne, donnée en pourcentage en masse. L'alumine Al₂O₃ et les impuretés constituent le complément à 100%.

### Faisabilité

Pour chacun de ces exemples, on évalue la faisabilité du produit grâce à un indice de faisabilité IF. Une valeur de IF égale à 10 correspond à une excellente faisabilité (rendement de fabrication optimal, pas de défauts sur les pièces obtenues), des valeurs comprises entre 7 et 9 révèlent une faisabilité satisfaisante (bon rendement de fabrication, les pièces produites présentent quelques petites fissures) et des valeurs inférieures ou égales à 6 correspondent à un rendement inacceptable (pièces morcelées...).

Sur les différents exemples de blocs réalisés, des échantillons ont été prélevés pour réaliser des tests.

### Mesure de la température de dilatation maximale avant changement de phase (Test A)

On établit la courbe de dilatation en fonction de la température et on relève la température correspondant à la dilatation maximale, avant la transformation (monoclinique vers quadratique) de la zircone, fournie dans le tableau 1.

**Tableau 1**

| Exemple | ZrO₂ | SiO₂ | Na₂O | Y₂O₃ | 50/ZrO₂ | IF | Test A |
|---|---|---|---|---|---|---|---|
| 1* | 36,4 | 12,3 | 1,13 | / | / | 10 | 1093°C |
| 2* | 37,4 | 11,9 | 1,31 | 0,86 | 1,34 | 10 | 1056°C |
| 3* | 36,6 | 11,9 | 1,25 | 1,20 | 1,37 | 10 | 1060°C |
| 4 | 36,6 | 11,1 | 1,35 | 1,94 | 1,37 | 9 | 1050°C |
| 5 | 40,0 | 12,1 | 1,20 | 2,15 | 1,25 | 8 | 1010°C |
| 6 | 35,1 | 14,2 | 1,70 | 2,61 | 1,42 | 8 | 1037°C |
| 7 | 36,0 | 14,0 | 1,40 | 3,05 | 1,39 | 8 | 1019°C |
| 8 | 35,1 | 13,9 | 1,59 | 3,43 | 1,42 | 8 | 997°C |
| 9 | 45,1 | 14,0 | 1,35 | 3,72 | 1,11 | 7 | 978°C |
| 10 | 37,5 | 12,1 | 1,15 | 3,77 | 1,33 | 7 | 961°C |
| 11* | 39,2 | 11,8 | 1,09 | 5,17 | 1,28 | 5 | 959°C |

| | | | | | | | |
|---|---|---|---|---|---|---|---|
| * Exemples hors invention | | | | | | | |

Le rôle positif de l'oxyde d'yttrium est confirmé. On considère qu'une teneur minimale dans le produit est nécessaire pour que l'effet positif soit significatif. La teneur minimale nécessaire augmente lorsque la teneur en zircone diminue : pour les produits présentant une teneur en oxyde d'yttrium supérieure au rapport 50/ZrO₂, on constate une baisse significative de la température de dilatation maximale avant changement de phase (température inférieure à 1050°C). Ainsi, la corrosion par le verre sera moins importante, la viscosité du verre sera augmentée et les risques de fuites de verre seront diminués.

En outre, au delà de 5% de Y₂O₃, la faisabilité des pièces devient inacceptable (exemple 11).

Le tableau 1 montre que les compositions des produits conformes à l'invention permettent d'obtenir de nouveaux compromis entre la faisabilité et la température de changement de phase. C'est le mérite des inventeurs d'avoir découvert cette possibilité d'obtenir ces nouveaux compromis, particulièrement avantageuse dans les applications à des fours de fusion de verre.

Nous avons par ailleurs vérifié que les autres propriétés utiles dans cette application, restent acceptables, notamment l'aptitude au lâcher de défauts, la résistance à la corrosion et le bullage.

L'analyse cristallographique des produits de l'invention révèle plus de 85% de zircone sous forme monoclinique. Ainsi, les teneurs en oxyde d'yttrium des produits de l'invention sont très largement insuffisantes pour qu'il ait un rôle de stabilisation significative de la zircone.

Bien entendu, la présente invention n'est pas limitée aux modes de réalisation décrits fournis à titre d'exemples illustratifs et non limitatifs.

En particulier, les produits selon l'invention ne se limitent pas à des formes ou de dimensions particulières, ni à l'application à des fours de verrerie.

## Revendications

1. Produit réfractaire fondu ayant la composition chimique moyenne suivante, en % en masse sur la base des oxydes et pour un total de 100% :
ZrO₂ : 30 - 46% ;
SiO₂ : 10 - 16% ;
Al₂O₃ : complément à 100% ;
Y₂O₃ ≥ 50/ZrO₂ et Y₂O₃ ≤ 5%,
Na₂O+K₂O : 0,5 - 4 % ;
CaO : ≤ 0,5% ;
Autres espèces : ≤ 1,5%.

2. Produit selon la revendication précédente, dans lequel la teneur en oxyde d'yttrium est supérieure au rapport 60/ ZrO₂.

3. Produit selon l'une quelconque des revendications précédentes, dans lequel la teneur en oxyde d'yttrium est supérieure au rapport 70/ ZrO₂.

4. Produit selon l'une quelconque des revendications précédentes, dans lequel la teneur en zircone est supérieure à 32% et/ou la teneur en silice est supérieure à 11 % et/ou la teneur en alumine est supérieure à 38% et/ou la teneur en oxyde d'yttrium est supérieure à 1,2% et/ou la teneur totale en oxydes alcalins Na₂O+K₂O est supérieure à 0,8%.

5. Produit selon la revendication précédente, dans lequel la teneur en zircone est inférieure à 41% et/ou la teneur en silice est inférieure à 15% et/ou la teneur en alumine est inférieure à 50% et/ou la teneur en oxyde d'yttrium est inférieure à 4,5% et/ou la teneur en oxydes alcalins Na₂O+K₂O est inférieure à 3,0%.

6. Produit selon l'une quelconque des revendications précédentes, dans lequel la teneur en oxyde d'yttrium est supérieure à 2,0%.

7. Produit selon l'une quelconque des revendications précédentes, se présentant sous la forme d'un bloc présentant une masse de plus de 10 kg.

8. Four de fusion de verre, comportant un produit selon l'une quelconque des revendications précédentes.

9. Four selon la revendication précédente, dans lequel ledit produit est disposé dans une région du four dans lequel il est susceptible d'entrer en contact avec du verre en fusion ou avec des gaz dégagés par la fusion du verre.

## Patentansprüche

1. Geschmolzenes Feuerfestprodukt mit der folgenden mittleren chemischen Zusammensetzung in Massenprozent auf der Basis von Oxiden und über eine Gesamtheit von 100%:
ZrO₂: 30-46%;
SiO₂: 10-16%;
Al₂O₃: vervollständigend zu 100%
Y₂O₃ ≥ 50/ ZrO₂ und Y₂O₃ ≤ 5% ;
Na₂O+ K₂O: 0,5-4%;
CaO: ≤ 0,5%;
Andere Bestandteile: ≤ 1,5%.

2. Produkt nach dem vorhergehenden Anspruch, in welchem der Gehalt an Yttriumoxid größer als das Verhältnis 60/ZrO₂ ist.

3. Produkt nach einem der vorhergehenden Ansprüche, in welchem der Gehalt an Yttriumoxid größer als das Verhältnis 70/ZrO₂ ist.

4. Produkt nach einem der vorhergehenden Ansprüche, in welchem der Zirkonoxidgehalt größer als 32% und/oder der Siliciumoxidgehalt größer als 11% und/oder der Gehalt an Aluminiumoxid größer als 38% und/oder der Gehalt an Yttriumoxyd größer als 1,2% und/oder der Gesamtgehalt an alkalischen Oxyden Na₂O+ K₂O größer als 0,8% ist.

5. Produkt nach dem vorhergehenden Anspruch, in welchem der Gehalt an Zirkonoxid kleiner als 41% und/oder der Gehalt an Siliciumoxid kleiner als 15% und/oder der Gehalt an Aluminiumoxid kleiner als 50% und/oder der Gehalt an Yttriumoxid kleiner als 4,5% und/oder der Gehalt an alkalischen Oxiden Na₂O+ K₂O kleiner als 3,0% ist.

6. Produkt nach einem der vorhergehenden Ansprüche, in welchem der Gehalt an Yttriumoxid größer als 2,0% ist.

7. Produkt nach einem der vohergehenden Ansprüche, welches sich in Form eines Blocks mit einer Masse von als 10 kg darstellt.

8. Glasschmelzofen, welcher ein Produkt nach einem der vorhergehenden Ansprüche aufweist.

9. Ofen nach dem vorhergehenden Anspruch, in welchem besagtes Produkt in einer Region des Ofens angeordnet ist, in welcher es geeignet ist, in Kontakt mit geschmolzenem Glas oder mit Gasen, die bei der Glasschmelze freigesetzt werden, zu gelangen.

## Claims

1. A fused refractory product having the following mean chemical composition, as a % by weight based on the oxides and for a total of 100%:
• ZrO₂: 30% - 46%;
• SiO₂: 10% - 16%;
• Al₂O₃: complement to 100%;
• Y₂O₃ ≥ 50/ZrO₂ and Y₂O₃ ≤ 5%;
• Na₂O + K₂O: 0.5%- 4%;
• CaO: ≤ 0.5%; and
• other species: ≤ 1.5%.

2. A product according to the preceding claim, wherein the yttrium oxide content is more than the ratio 60/ZrO₂.

3. A product according to any preceding claim, wherein the yttrium oxide content is more than the ratio 70/ZrO₂.

4. A product according to any preceding claim, wherein the zirconia content is more than 32% and/or the silica content is more than 11% and/or the alumina content is more than 38% and/or the yttrium oxide content is more than 1.2% and/or the total alkali oxide content, Na₂O + K₂O, is more than 0.8%.

5. A product according to the preceding claim, wherein the zirconia content is less than 41% and/or the silica content is less than 15% and/or the alumina content is less than 50% and/or the yttrium oxide content is less than 4.5% and/or the total alkali oxide content, Na₂O + K₂O, is less than 3.0%.

6. A product according to any preceding claim, wherein the yttrium oxide content is more than 2.0%.

7. A product according to any preceding claim, in the form of a block having a mass of more than 10 kg.

8. A glass melting furnace comprising a product according to any preceding claim.

9. A furnace according to the preceding claim, wherein said product is disposed in a region of the furnace where it is susceptible of coming into contact with molten glass or with gases released by glass melting.
